(19) **Europäisches Patentamt**
**European Patent Office**
**Office européen des brevets**

(11) **EP 3 957 098 B1**

(12) **EUROPEAN PATENT SPECIFICATION**

(45) Date of publication and mention
of the grant of the patent:
**06.11.2024   Bulletin 2024/45**

(21) Application number: **19719258.6**

(22) Date of filing: **18.04.2019**

(51) International Patent Classification (IPC):
$H04W\ 28/02^{(2009.01)}$       $H04W\ 72/00^{(2023.01)}$
$H04W\ 72/12^{(2023.01)}$       $H04W\ 16/22^{(2009.01)}$
$H04W\ 24/02^{(2009.01)}$       $H04W\ 24/10^{(2009.01)}$

(52) Cooperative Patent Classification (CPC):
**H04W 28/021; H04W 16/22; H04W 24/02;**
**H04W 24/10; H04W 28/0226**

(86) International application number:
**PCT/EP2019/060181**

(87) International publication number:
**WO 2020/211953 (22.10.2020 Gazette 2020/43)**

(54) **TRAFFIC FLOW MANAGEMENT IN A CELLULAR NETWORK**

VERKEHRSFLUSSVERWALTUNG IN EINEM ZELLULAREN NETZWERK

GESTION DE FLUX DE TRAFIC DANS UN RÉSEAU CELLULAIRE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**23.02.2022   Bulletin 2022/08**

(73) Proprietor: **Telefonaktiebolaget LM Ericsson**
**(publ)**
**164 83 Stockholm (SE)**

(72) Inventors:
• **EL ESSAILI, Ali**
**52072 Aachen (DE)**

• **PALAIOS, Alexandros**
**47441 Moers (DE)**

(74) Representative: **Ericsson**
**Patent Development**
**Torshamnsgatan 21-23**
**164 80 Stockholm (SE)**

(56) References cited:
**WO-A1-2017/007474       WO-A1-2017/191615**
**US-A1- 2018 204 453**

## Description

### Technical Field

The disclosure relates to methods of managing traffic flows in a cellular network and nodes configured to operate in accordance with those methods.

### Background

Traffic flow models characterize traffic by some variables, such as user equipment densities and user equipment velocities. Density is measured in terms of the number of vehicles per unit area. These traffic flow models are used to represent traffic, such as in an urban network and in highways, in order to improve the utilization of roads, optimize traffic efficiency, etc.

Microscopic traffic flow models consider individual users and characterise the velocity or trajectory for a single vehicle-to-everything (V2X) user. On the other hand, macroscopic traffic flow models consider multiple V2X users and provide an average characterisation of speed and density on a road. Cellular V2X (C-V2X) uses long term evolution (LTE) and fifth generation (5G) technology to provide V2X users with different V2X services. Vehicles are equipped with different sensing equipment, e.g. lidar, camera, radars, accelerometers.

V2X using cellular technology deals with large amounts of data, which is communicated between V2X users and V2X application servers. This includes both sensor measurements from V2X user equipments (uplink) and V2X messages from V2X application servers (downlink). This consequently leads to a massive amount of data exchange over a mobile network. The Quality of Service (QoS) experienced by the V2X users may drop in congested areas leading to user dissatisfaction and malfunctioning of V2X applications.

As such, there is a need for an improved technique for managing traffic flow in a cellular network, which is aimed at addressing the problems described above.

WO 2017/007474 describes an approach for adaptive streaming and resource allocation method for mobile video traffic. Systems and methods are described to adapt video streaming to alleviate congestion and improve user quality of experience (QoE). The example implementations utilize prediction of the user mobility behavior and the class of the user, as well as prediction of the traffic patterns and the channel quality in the geographical area that the user traverses moving from a coverage area of one source base station to the next target base station.

WO 2017/191615 relates to congestion control for a vehicle-to- everything (V2X) system that is expected to be better than the congestion control provided by conventional technologies such as dedicated short-range communications (DSRC). WO 2017/191615 is directed to congestion control that uses not only radio input, but may also take other factors into account. For example, time-sensitive policies can be used based on known traffic patterns. It is also possible to apply machine learning.

U.S. Patent Application Publication No. 2018/0204453 relates to traffic control based on network state, or, more particularly, algorithms for determining traffic adjustments in a geographic region as a function of cellular network usage. A method is described that includes identifying a traffic device for a vehicle or a pedestrian, and generating a traffic adjustment for the traffic device as a function of network activity or potential network activity at a portion of a cellular network.

### Summary

The present invention is defined by the independent claims. Further embodiments are set forth in the dependent claims.

It is thus an object to obviate or eliminate at least some of the above disadvantages associated with existing techniques and provide an improved technique for managing traffic flow in a cellular network.

Therefore, according to an aspect, there is provided a method of managing traffic flows in a cellular network by a traffic flow management node. The method comprises, for each tile of a plurality of tiles of the cellular network, measuring a traffic flow in the tile based on a location and corresponding velocity of at least one user equipment in the cellular network from information provided by the at least one user equipment. The method also comprises, for each tile of a plurality of tiles of the cellular network, estimating subsequent traffic flow in the tile based on a comparison of the measured traffic flow in the tile to one or more previously measured traffic flows in the tile and transmitting an indication of the estimated subsequent traffic flow in the tile to a resource management node enabling management of resources related to the traffic flows in at least one tile of the cellular network by said resource management node. The idea thus provides an improved technique for managing traffic flow in a cellular network. The improved technique makes it possible to more accurately characterise and predict traffic flow in a cellular network. In this way, more accurate information is provided for use in the management (e.g. provisioning and/or optimization) of cellular network resources. The resources of the cellular network can thus be better optimized, e.g. for vehicle-to-everything communication. Also, as the subsequent traffic flow is estimated per tile, this resource optimization can also be performed per tile. Advantageously, the method is suitable for use in cloud deployments.

In some embodiments, the method may comprise estimating the subsequent traffic flow in the tile based on one or more spatial differences and/or one or more temporal differences identified by the comparison of the measured traffic flow in the tile to the one or more previously measured traffic flows in the tile.

In some embodiments, the method may comprise using a machine learning algorithm to estimate the subsequent traffic flow in the tile.

In some embodiments, the estimation of the subsequent traffic flow in the tile may be an estimation of the subsequent traffic flow in the tile at a first time and the method may comprise updating the estimation of the subsequent traffic flow in the tile based on an actual measurement of the traffic flow in the tile at the first time. In some of these embodiments, the method may comprise transmitting an indication of the updated estimation of the subsequent traffic flow in the tile to the resource management node enabling management of resources related to the traffic flows in at least one tile of the cellular network by said resource management node.

In some embodiments, the management of resources related to the traffic flows in at least one tile of the cellular network may comprise allocating resources in the at least one tile to manage the traffic flows in the at least one tile and/or provisioning a quality of service in the at least one tile to manage the traffic flows in the at least one tile. In some embodiments, the resources may comprise resources for vehicle-to-everything (V2X) communication.

In some embodiments, the plurality of tiles may be defined by a grid.

In some embodiments, the at least one user equipment may be served by at least one of a plurality of base stations, each having a coverage area, and wherein the plurality of base stations cover the coverage area of the cellular network. In some embodiments, the plurality of tiles of the cellular network may span the coverage areas of the plurality of base stations. In some embodiments, the coverage areas of the plurality of base stations may be overlapping.

In some embodiments, the information provided by the at least one user equipment may be received from the at least one user equipment and/or from at least one location service function node.

In some embodiments, the at least one user equipment may comprise one or more vehicles and/or one or more mobile devices.

According to another aspect, there is provided a traffic flow management node configured to operate in accordance with the method of managing traffic flows in a cellular network by a traffic flow management node described earlier. In some embodiments, the traffic flow management node may comprise processing circuitry and at least one memory for storing instructions which, when executed by the processing circuitry, cause the traffic flow management node to operate in accordance with the method of managing traffic flows in a cellular network by a traffic flow management node described earlier. The traffic flow management node thus provides the advantages discussed earlier in respect of the method of managing traffic flows in a cellular network by a traffic flow management node.

In some embodiments, the traffic flow management node may be a node of the cellular network or a node outside the cellular network. In some embodiments, the traffic flow management node may be an application server.

According to another aspect, there is provided a method of managing traffic flows in a cellular network by a resource management node. The method comprises managing resources related to the traffic flows in at least one tile of a plurality of tiles of the cellular network based on an estimated subsequent traffic flow for each tile of the plurality of tiles of the cellular network. The estimated subsequent traffic flow for each tile of the plurality of tiles of the cellular network is based on a comparison of a traffic flow in the tile measured based on a location and corresponding velocity of at least one user equipment in the cellular network to one or more previously measured traffic flows in the tile. The method also comprises providing the managed resources to one or more user equipments in the at least one tile of the plurality of tiles of the cellular network.

The idea thus provides an improved technique for managing traffic flow in a cellular network. The traffic flow in the cellular network is more accurately characterised and predicted, such that improved management (e.g. provisioning and/or optimization) of cellular network resources can be achieved using this traffic flow information. The resources of the cellular network can thus be better optimized, e.g. for vehicle-to-everything communication. Also, as the subsequent traffic flow is estimated per tile, this resource optimization can also be performed per tile. Advantageously, the method is suitable for use in cloud deployments.

In some embodiments, the estimated subsequent traffic flow in the tile may be an estimation of the subsequent traffic flow in the tile at a first time and the method may comprise managing resources related to the traffic flows in at least one tile of the plurality of tiles of the cellular network based on an updated estimation of the subsequent traffic flow for each tile of the plurality of tiles of the cellular network. In these embodiments, the updated estimation of the subsequent traffic flow for each tile of the plurality of tiles of the cellular network may be based on an actual measurement of the traffic flow in the tile at the first time.

In some embodiments, managing resources related to the traffic flows in at least one tile may comprise allocating resources in the at least one tile to manage the traffic flows in the at least one tile and/or provisioning a quality of service in the at least one tile to manage the traffic flows in the at least one tile.

According to another aspect, there is provided a resource management node configured to operate in accordance with the method of managing traffic flows in a cellular network by a resource management node described earlier. In some embodiments, the resource management node may comprise processing circuitry and at least one memory for storing instructions which, when executed by the processing circuitry, cause the resource management node to operate in accordance with the method of managing traffic flows in a cellular network by a resource management node described earlier. The resource management node thus provides the advantages discussed earlier in respect of the method of managing traffic flows in a cellular network by a resource management node.

According to another aspect, there is provided a system comprising any one or more of: at least one traffic flow management node as described earlier, at least one user equipment operable to connect to the system and provide information indicative of a location and corresponding velocity of the at least one user equipment, and at least one resource management node as described earlier. The system thus provides the advantages discussed earlier in respect of the method of managing traffic flows in a cellular network by a traffic flow management node and a resource management node.

According to another aspect, there is provided a system comprising processing circuitry and at least one memory for storing instructions which, when executed by the processing circuitry, cause the system to operate in accordance with the method described earlier. The system thus provides the advantages discussed earlier in respect of the method of managing traffic flows in a cellular network by a traffic flow management node and a resource management node.

Thus, an improved technique for managing traffic flow in a cellular network is provided.

Brief description of the drawings

For a better understanding of the idea, and to show how it may be put into effect, reference will now be made, by way of example, to the accompanying drawings, in which:

Figure 1 is a system according to an embodiment;

Figure 2 is a block diagram illustrating a traffic flow management node according to an embodiment;

Figure 3 is a block diagram illustrating a method performed by a traffic flow management node according to an embodiment;

Figure 4 is a block diagram illustrating a resource management node according to an embodiment;

Figure 5 is a block diagram illustrating a method performed by a resource management node according to an embodiment;

Figure 6 is a signalling diagram illustrating an exchange of signals in an embodiment;

Figure 7 is a simplified schematic of a plurality of tiles of a cellular network according to an embodiment;

Figure 8 is a representation of traffic flow over time;

Figure 9 is a simplified schematic of base station coverage areas;

Figure 10 is a block diagram illustrating a method performed by a traffic flow management node according to an embodiment;

Figure 11 is a block diagram illustrating a traffic flow management node according to an embodiment; and

Figure 12 is a block diagram illustrating a resource management node according to an embodiment.

Detailed Description

There is described herein an improved technique for managing traffic flow in a cellular network. The cellular network referred to herein may be a radio access network (RAN) or any other cellular network. The cellular network can, for example, be a fourth generation (4G) cellular network, a fifth generation (5G) cellular network, or any other generation of cellular network.

The methods described herein may be realized using the vehicle-to-everything (V2X) architecture described in 3GPP TS 23.285 and may also apply to the enhanced 5G V2X architecture described in 3GPP TS 23.287. The methods described herein also apply to application layer models, such as those described in 3GPP TS 23.286, where a V2X application enabler (VAE) client may perform the functions of the at least one user equipment referred to herein and a VAE server may perform the functions of the traffic flow management node referred to herein.

However, it will be understood that the methods described herein may also be applicable to other cellular network architectures.

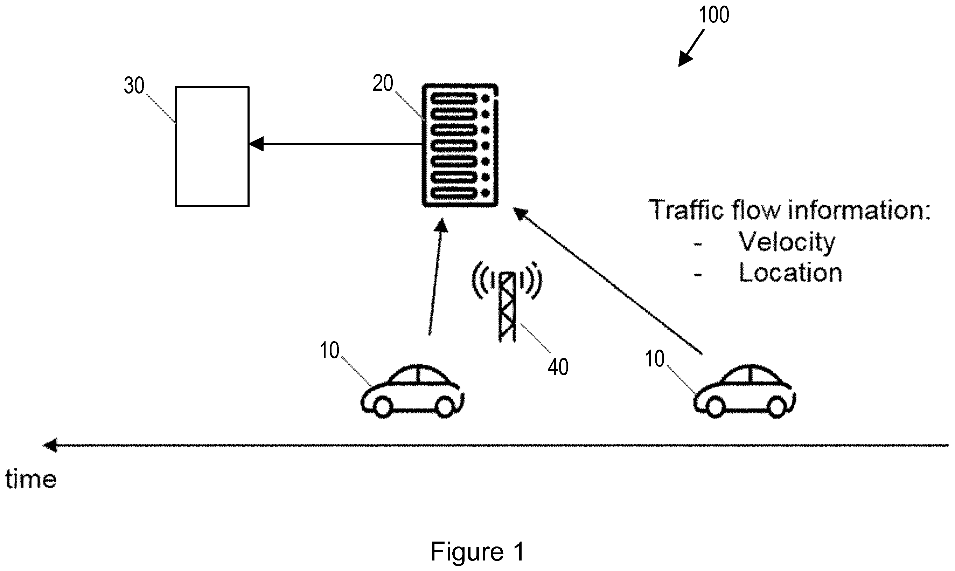

**Figure 1** illustrates a system 100 in accordance with an embodiment. The system 100 is for managing traffic flows in a cellular network.

As illustrated in Figure 1, the system 100 can comprise at least one user equipment 10. The at least one user equipment 10 can be at least one user equipment 10 in the cellular network. The at least one user equipment 10 may comprise one or more vehicles (e.g. one or more cars, or any other vehicles, or any combination of vehicles), one or more mobile devices (e.g. one or more smartphones, one or more tablets, or any other mobile devices or any combination of mobile devices), or any other user equipment, or any combination of user equipments. The at least one user equipment 10 may be a V2X user equipment according to some embodiments.

The at least one user equipment 10 can be configured to connect to the system 100 or, more specifically, to one or more nodes of the system 100. The at least one user equipment 10 is configured to provide (or report) information indicative of a location and corresponding velocity of the at least one user equipment 10. The information indicative of a location and corresponding velocity of the at least one user equipment 10 may also be referred to herein as "traffic flow information".

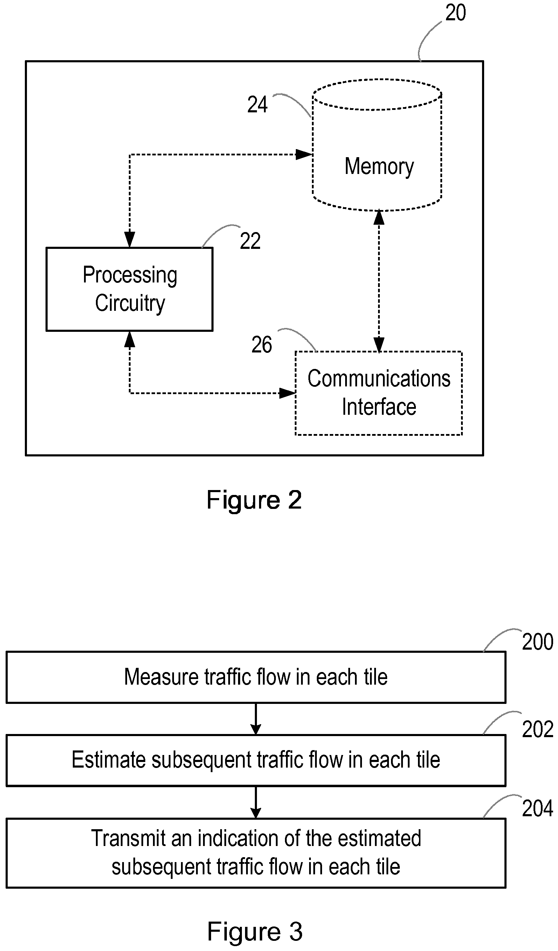

As illustrated in Figure 1, the system 100 can comprise at least one traffic flow management node 20, which will be described in more detail later with reference to Figures 2 and 3. The at least one user equipment 10 is configured to provide (or report) information indicative of the location and corresponding velocity of the at least one user equipment 10 to the at least one traffic flow management node 20, either directly or indirectly. In some embodiments, as illustrated in Figure 1, the at least one user equipment 10 can be configured to provide the information indicative of the location and corresponding velocity of the at least one user equipment 10 to the at least one traffic flow management node 20 via at least one base station 40, at least one application server (e.g. a V2X application server) and/or a reference point (e.g. a V1 reference point). The information may be a report of the location and corresponding velocity of the at least one user equipment 10. The information (or report) may be preconfigured by the at least one traffic flow management node 20 or triggered based on certain criteria (e.g. periodic reporting, event-driven reporting, etc.).

The at least one traffic flow management node 20 may be a node of the cellular network, e.g. a node that resides in a mobile network operator (MNO) network. Thus, the at least one traffic flow management node 20 can be a network node according to some embodiments. In some embodiments, the at least one traffic flow management node 20 may be a network data analytics function (NWDAP) node, a policy control function (PCF) node, or a network exposure function (NEF) node. In some of these embodiments, the at least one traffic flow management node 20 may communicate with an application server (e.g. a V2X application server), e.g. over an interface such as over a Nnef interface. In these embodiments, the information from the at least one user equipment 10 may be communicated to the at least one traffic flow management node 20 via the application server. Alternatively, the at least one traffic flow management node 20 may be a node outside the cellular network, such as a node managed by a third party or a third party application function (AF). In some embodiments, for example, the at least one traffic flow management node 20 may itself be an application server, e.g. a V2X application server. The at least one traffic flow management node 20 can be a node providing a service (e.g. a V2X service) to one or more user equipments in the cellular network. The at least one traffic flow management node 20 can interact with the cellular network to perform the functions described herein.

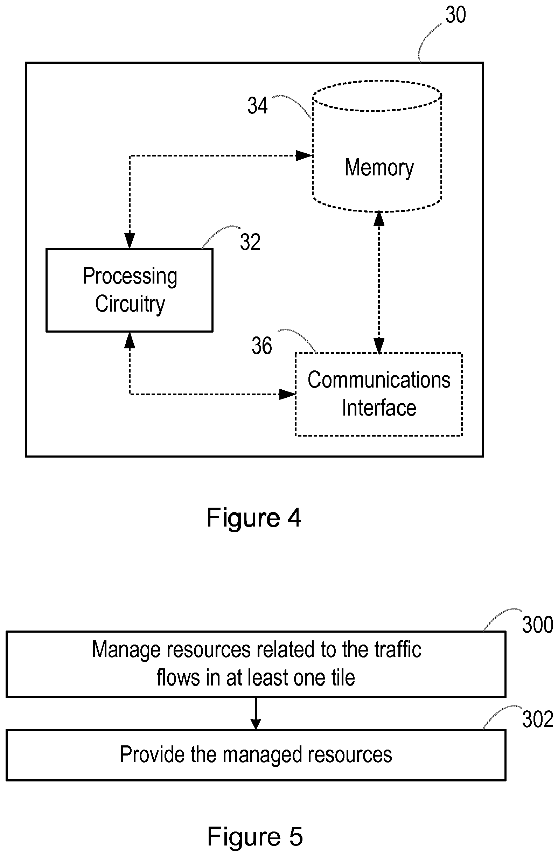

The system 100 can comprise at least one resource management node 30, which will be described in more detail later with reference to Figures 4 and 5. The at least one resource management node 30 can interact with the cellular network to perform the functions described herein.

Although not illustrated, in some embodiments, the system 100 itself may comprise processing circuitry and at least one memory for storing instructions which, when executed by the processing circuitry, cause the system to operate in accordance with the method described herein for the traffic flow management node 20 and/or the method described herein for the resource management node 30.

Herein, reference is made to a plurality of tiles of the cellular network. The plurality of tiles may, for example, be defined by a grid. The cellular network is (and thus the cells of the cellular network are) segmented or divided into the plurality of tiles. The plurality of tiles are different to (i.e. do not correspond to) the cells of the cellular network. A tile of the cellular network can span several cells of the cellular network (or parts of them) and a cell of the cellular network can span several tiles of the cellular network (or parts of them). For example, an N to M relation can be provided between cells of the cellular network and tiles of the cellular network. Each tile of the plurality of tiles of the cellular network can correspond to a different geographical area. For example, in some embodiments, each tile of the plurality of tiles of the cellular network may correspond to a different road segment in the cellular network. In some of these embodiments, the cellular network may be represented by a map that is divided into a plurality of tiles, each corresponding to a different road segment. Thus, in some embodiments, each tile of the plurality of tiles may correspond to a road segment. The plurality of tiles make up a traffic flow measurement table. The process described herein can be applied (e.g. iteratively) to small or large geographical areas.

According to the claimed invention, the plurality of tiles of the cellular network are defined by a grid, and the cellular network is segmented into the plurality of tiles such that tiles in the plurality of tiles do not correspond to cells of the cellular network.

**Figure 2** illustrates a traffic flow management node 20 in accordance with an embodiment. As illustrated in Figure 2, the traffic flow management node 20 comprises processing circuitry (or logic) 22.

The processing circuitry 22 controls the operation of the traffic flow management node 20 and can implement the method described herein in respect to the traffic flow management node 20. The processing circuitry 22 can comprise one or more processors, processing units, multi-core processors or modules that are configured or programmed to control the traffic flow management node 20 in the manner described herein. In particular implementations, the processing circuitry 22 can comprise a plurality of software and/or hardware modules that are each configured to perform, or are for performing, individual or multiple steps of the method described herein.

Briefly, the processing circuitry 22 of the traffic flow management node 20 is configured to, for each tile of a plurality of tiles of a cellular network, measure a traffic flow in the tile based on a location and corresponding velocity of at least one user equipment 10 in the cellular network from information provided by the at least one user equipment 10. The processing circuitry 22 of the traffic flow management node 20 is also configured to, for each tile of the plurality of tiles of the cellular network, estimate subsequent traffic flow in the tile based on a comparison of the measured traffic flow in the tile to one or more previously measured traffic flows in the tile, and transmit an indication of the estimated subsequent traffic flow in the tile to a resource management node enabling management of resources related to the traffic flows in at least one tile of the cellular network by the resource management node.

As illustrated in Figure 2, the traffic flow management node 20 may optionally comprise a memory 24. The memory 24 of the traffic flow management node 20 can comprise a volatile memory or a non-volatile memory. In some embodiments, the memory 24 of the traffic flow management node 20 may comprise a non-transitory media. Examples of the memory 24 of the traffic flow management node 20 include, but are not limited to, a random access memory (RAM), a read only memory (ROM), a mass storage media such as a hard disk, a removable storage media such as a compact disk (CD) or a digital video disk (DVD), and/or any other memory.

The processing circuitry 22 of the traffic flow management node 20 can be connected to the memory 24 of the traffic flow management node 20. In some embodiments, the memory 24 of the traffic flow management node 20 may be for storing program code or instructions which, when executed by the processing circuitry 22 of the traffic flow management node 20, cause the traffic flow management node 20 to operate in the manner described herein in respect of the traffic flow management node 20. For example, in some embodiments, the memory 24 of the traffic flow management node 20 may be configured to store program code or instructions that can be executed by the processing circuitry 22 of the traffic flow management node 20 to perform the method described herein in respect of the traffic flow management node 20.

Alternatively or in addition, the memory 24 of the traffic flow management node 20 can be configured to store any requests, responses, indications, information, data, notifications, signals, or similar, that are described herein. The processing circuitry 22 of the traffic flow management node 20 may be configured to control the memory 24 of the traffic flow management node 20 to store any requests, responses, indications, information, data, notifications, signals, or similar, that are described herein.

In some embodiments, as illustrated in Figure 2, the traffic flow management node 20 may optionally comprise a communications interface 26. The communications interface 26 of the traffic flow management node 20 can be connected to the processing circuitry 22 of the traffic flow management node 20 and/or the memory 24 of traffic flow management node 20. The communications interface 26 of the traffic flow management node 20 may be operable to allow the processing circuitry 22 of the traffic flow management node 20 to communicate with the memory 24 of the traffic flow management node 20 and/or vice versa. The communications interface 26 of the traffic flow management node 20 can be configured to transmit and/or receive any requests, responses, indications, information, data, notifications, signals, or similar, that are described herein. In some embodiments, the processing circuitry 22 of the traffic flow management node 20 may be configured to control the communications interface 26 of the traffic flow management node 20 to transmit and/or receive any requests, responses, indications, information, data, notifications, signals, or similar, that are described herein.

Although the traffic flow management node 20 is illustrated in Figure 2 as comprising a single memory 24, it will be appreciated that the traffic flow management node 20 may comprise at least one memory (i.e. a single memory or a plurality of memories) 24 that operate in the manner described herein. Similarly, although the traffic flow management node 20 is illustrated in Figure 2 as comprising a single communications interface 26, it will be appreciated that the traffic flow management node 20 may comprise at least one communications interface (i.e. a single communications interface or a plurality of communications interface) 26 that operate in the manner described herein.

It will also be appreciated that Figure 2 only shows the components required to illustrate an embodiment of the traffic flow management node 20 and, in practical implementations, the traffic flow management node 20 may comprise additional or alternative components to those shown.

**Figure 3** is a flowchart illustrating a method of managing traffic flows in a cellular network by a traffic flow management node 20 in accordance with an embodiment. The traffic flow management node 20 described earlier with reference to Figure 2 is configured to operate in accordance with the method of Figure 3. The method can be performed by or under the control of the processing circuitry 22 of the traffic flow management node 20.

With reference to Figure 3, at block 200, for each tile of a plurality of tiles of the cellular network, a traffic flow in the tile is measured based on a location and corresponding velocity of at least one user equipment 10 in the cellular network from information provided by the at least one user equipment 10. More specifically, the processing circuitry 22 of the traffic flow management node 20 measures the traffic flow in each tile based on the location and corresponding velocity of the at least one user equipment 10 in the cellular network from information provided by the at least one user equipment 10. The information provided by the at least one user equipment 10 may be received from the at least one user equipment and/or from at least one other node, such as at least one location service function node.

A person skilled in the art will be aware of various way in which to measure traffic flow based on a location and corresponding velocity of at least one user equipment 10 in the cellular network. In some embodiments, for example, measuring a traffic flow in the tile based on a location and corresponding velocity of at least one user equipment 10 in the cellular network may comprise, for each tile of the plurality of tiles of the cellular network, determining a number of user equipments in the tile based on the location of the at least one user equipment 10 in the cellular network and measuring the traffic flow in the tile based on the determined number. Thus, traffic flow can be determined based on the number of user equipments in the tile in some embodiments. The number of user equipments per tile can be referred to as the density of user equipments. Alternatively or in addition, for example, measuring a traffic flow in the tile based on a location and corresponding velocity of at least one user equipment 10 in the cellular network may comprise, for each tile of the plurality of tiles of the cellular network, determining an average velocity of user equipments in the tile based on the velocity of the at least one user equipment in the cellular network and measuring the traffic flow in the tile based on the determined average velocity. Thus, traffic flow can be determined based on an average velocity (and/or the number) of user equipments in the tile in some embodiments.

In more detail, in a 3GPP network, traffic flow may be measured based on the average velocity V and density ρ of user equipments. The traffic flow can be measured based on the information collected about the velocity of the user equipments and the number of user equipments in a tile (e.g. using location tracking). The density ρ of user equipments is the number of user equipments per tile (e.g. per road unit). The traffic flow F may be represented as F → (ρ, V). In a simple form, the traffic flow F can be expressed by the following equation:

$$F = \rho \cdot V,$$

where ρ is the density of user equipments (e.g. the number of user equipments per km) and V is the average velocity of user equipments (e.g. in km/h). Thus, using the information indicative of the location and corresponding velocity of the at least one user equipment, the traffic flow in a certain tile (e.g. on a certain road) can be characterized.

Returning back to Figure 3, at block 202, for each tile of the plurality of tiles of the cellular network, subsequent traffic flow in the tile is estimated based on a comparison of the measured traffic flow in the tile to one or more previously measured traffic flows in the tile. More specifically, the processing circuitry 22 of the traffic flow management node 20 estimates the subsequent traffic flow in each tile based on the comparison. Thus, at block 202, a future traffic flow is predicted for each tile of the plurality of tiles of the cellular network. In some embodiments, the subsequent traffic flow in the tile may be estimated based on one or more spatial differences and/or one or more temporal differences identified by the comparison of the measured traffic flow in the tile to the one or more previously measured traffic flows in the tile. In some embodiments, a machine learning (or artificial intelligence (AI)) algorithm may be used to estimate the subsequent traffic flow in the tile. In some embodiments, for example, the machine learning (or AI) algorithm may use current and previous traffic flow measurements to learn spatial and temporal variations in the traffic flow measurements and predict a future traffic flow at t+dt.

At block 204, for each tile of the plurality of tiles of the cellular network, an indication of the estimated subsequent traffic flow in the tile is transmitted to a resource management node enabling management of resources related to the traffic flows in at least one tile of the cellular network by the resource management node. More specifically, the processing circuitry 22 of the traffic flow management node 20 transmits the indication of the estimated subsequent traffic flow in each tile. In some embodiments, the processing circuitry 22 of the traffic flow management node 20 may configured to transmit the indication of the estimated subsequent traffic flow in each tile directly to the resource management node 30. In other embodiments, the processing circuitry 22 of the traffic flow management node 20 may configured to transmit the indication of the estimated subsequent traffic flow in each tile to the resource management node 30 via at least one other node.

Thus, the transmission of the indication of the estimated subsequent traffic flow to the resource management node enables the management of resources related to the traffic flows in at least one tile of the cellular network by the resource management node. The management of resources related to the traffic flows in at least one tile of the cellular network can, for example, comprise allocating resources in the at least one tile to manage the traffic flows in the at least one tile, provisioning a quality of service (QoS) in the at least one tile to manage the traffic flows in the at least one tile, and/or any other management of resources related to the traffic flows in at least one tile of the cellular network.

The resources referred to herein can comprise resources for vehicle-to-everything (V2X) communication, or any other resources, or any combination of resources. In the case of resources for V2X communication, the resources may comprise one or more resources for long-range V2X communication, such as communication between a user equipment and a Node B (e.g. over the 3GPP Uu interface). Alternatively or in addition, the resources may comprise one or more resources for short-range V2X communication, such as communication between road users and roadside infrastructure (e.g. over a side-link, such as the 3GPP PC5 interface).

Although not illustrated in Figure 3, in some embodiments, the method can also comprise updating (e.g. correcting) the estimation of the subsequent traffic flow in the tile. More specifically, the processing circuitry 22 of the traffic flow management node 20 can be configured to update the estimation of the subsequent traffic flow in the tile. In these embodiments, the estimation of the subsequent traffic flow in the tile may be an estimation of the subsequent traffic flow in the tile at a first time and the method may comprise updating the estimation of the subsequent traffic flow in the tile based on an actual measurement of the traffic flow in the tile at the first time. In some embodiments, the actual measurement of the traffic flow in the tile at the first time may be provided by the at least one user equipment 10 and/or at least one other node. In other embodiments, the processing circuitry 22 of the traffic flow management node 20 can be configured to measure the actual traffic flow in the tile at the first time, e.g. from information provided by the at least one user equipment 10 and/or at least one other node. The actual measurement of the traffic flow in the tile at the first time can be a live (or real-time) measurement of the traffic flow in the tile at the first time. The estimation of the subsequent traffic flow for each tile of the plurality of tiles of the cellular network may be updated as measurements of the traffic flow in the tile at the first time are provided. Thus, in some embodiments, the future traffic flow predicted for each tile of the plurality of tiles of the cellular network can be updated (e.g. corrected).

In some embodiments involving an updated estimation, the method may also comprise transmitting an indication of the updated estimation of the subsequent traffic flow in the tile to the resource management node enabling management of resources related to the traffic flows in at least one tile of the cellular network by the resource management node. More specifically, the processing circuitry 22 of the traffic flow management node 20 can be configured to transmit the indication of the updated estimation of the subsequent traffic flow in the tile. In some embodiments, the processing circuitry 22 of the traffic flow management node 20 may configured to transmit the indication of the updated estimation of the subsequent traffic flow in the tile directly to the resource management node 30. In other embodiments, the processing circuitry 22 of the traffic flow management node 20 may configured to transmit the indication of the updated estimation of the subsequent traffic flow to the resource management node 30 via at least one other node.

**Figure 4** illustrates a resource management node 30 in accordance with an embodiment. As illustrated in Figure 4, the resource management node 30 comprises processing circuitry (or logic) 32.

The processing circuitry 32 controls the operation of the resource management node 30 and can implement the method described herein in respect to the resource management node 30. The processing circuitry 32 can comprise one or more processors, processing units, multi-core processors or modules that are configured or programmed to control the resource management node 30 in the manner described herein. In particular implementations, the processing circuitry 32 can comprise a plurality of software and/or hardware modules that are each configured to perform, or are for performing, individual or multiple steps of the method described herein.

Briefly, the processing circuitry 32 of the resource management node 30 is configured to manage resources related to the traffic flows in at least one tile of a plurality of tiles of a cellular network based on an estimated subsequent traffic flow for each tile of the plurality of tiles of the cellular network. The estimated subsequent traffic flow for each tile of the plurality of tiles of the cellular network is based on a comparison of a traffic flow in the tile measured based on a location and corresponding velocity of at least one user equipment 10 in the cellular network to one or more previously measured traffic flows in the tile. The processing circuitry 32 of the resource management node 30 is also configured to provide the managed resources to one or more user equipments in the at least one tile of the plurality of tiles of the cellular network.

As illustrated in Figure 4, the resource management node 30 may optionally comprise a memory 34. The memory 34 of the resource management node 30 can comprise a volatile memory or a non-volatile memory. In some embodiments, the memory 34 of the resource management node 30 may comprise a non-transitory media. Examples of the memory 34 of the resource management node 30 include, but are not limited to, a random access memory (RAM), a read only memory (ROM), a mass storage media such as a hard disk, a removable storage media such as a compact disk (CD) or a digital video disk (DVD), and/or any other memory.

The processing circuitry 32 of the resource management node 30 can be connected to the memory 34 of the resource management node 30. In some embodiments, the memory 34 of the resource management node 30 may be for storing program code or instructions which, when executed by the processing circuitry 32 of the resource management node 30, cause the resource management node 30 to operate in the manner described herein in respect of the resource management node 30. For example, in some embodiments, the memory 34 of the resource management node 30 may be configured to store program code or instructions that can be executed by the processing circuitry 32 of the resource management node 30 to perform the method described herein in respect of the resource management node 30.

Alternatively or in addition, the memory 34 of the resource management node 30 can be configured to store any requests, responses, indications, information, data, notifications, signals, or similar, that are described herein. The processing circuitry 32 of the resource management node 30 may be configured to control the memory 34 of the resource management node 30 to store any requests, responses, indications, information, data, no-

15 EP 3 957 098 B1 16

tifications, signals, or similar, that are described herein.

In some embodiments, as illustrated in Figure 4, the resource management node 30 may optionally comprise a communications interface 36. The communications interface 36 of the resource management node 30 can be connected to the processing circuitry 32 of the resource management node 30 and/or the memory 34 of resource management node 30. The communications interface 36 of the resource management node 30 may be operable to allow the processing circuitry 32 of the resource management node 30 to communicate with the memory 34 of the resource management node 30 and/or vice versa. The communications interface 36 of the resource management node 30 can be configured to transmit and/or receive any requests, responses, indications, information, data, notifications, signals, or similar, that are described herein. In some embodiments, the processing circuitry 32 of the resource management node 30 may be configured to control the communications interface 36 of the resource management node 30 to transmit and/or receive any requests, responses, indications, information, data, notifications, signals, or similar, that are described herein.

Although the resource management node 30 is illustrated in Figure 4 as comprising a single memory 34, it will be appreciated that the resource management node 30 may comprise at least one memory (i.e. a single memory or a plurality of memories) 34 that operate in the manner described herein. Similarly, although the resource management node 30 is illustrated in Figure 4 as comprising a single communications interface 36, it will be appreciated that the resource management node 30 may comprise at least one communications interface (i.e. a single communications interface or a plurality of communications interface) 36 that operate in the manner described herein.

It will also be appreciated that Figure 4 only shows the components required to illustrate an embodiment of the resource management node 30 and, in practical implementations, the resource management node 30 may comprise additional or alternative components to those shown.

**Figure 5** is a flowchart illustrating a method of managing traffic flows in a cellular network by a resource management node 30 in accordance with an embodiment. The resource management node 30 described earlier with reference to Figure 4 is configured to operate in accordance with the method of Figure 5. The method can be performed by or under the control of the processing circuitry 32 of the resource management node 30.

With reference to Figure 5, at block 300, resources related to the traffic flows in at least one tile of a plurality of tiles of the cellular network are managed based on an estimated subsequent traffic flow for each tile of the plurality of tiles of the cellular network. More specifically, the processing circuitry 32 of the resource management node 30 manages the resources related to the traffic flows in at least one tile of the plurality of tiles of the cellular network based on the estimated subsequent traffic flow for each tile of the plurality of tiles of the cellular network. The estimated subsequent traffic flow for each tile of the plurality of tiles of the cellular network is based on a comparison of a traffic flow in the tile measured based on a location and corresponding velocity of at least one user equipment 10 in the cellular network to one or more previously measured traffic flows in the tile.

Although not illustrated in Figure 5, in some embodiments, the method can comprise managing resources related to the traffic flows in at least one tile of the plurality of tiles of the cellular network based on an updated estimation of the subsequent traffic flow for each tile of the plurality of tiles of the cellular network. More specifically, the processing circuitry 32 of the resource management node 30 may manage the resources related to the traffic flows in at least one tile of the plurality of tiles of the cellular network based on the updated estimation of the subsequent traffic flow for each tile of the plurality of tiles of the cellular network. In these embodiments, the estimated subsequent traffic flow in the tile may be an estimation of the subsequent traffic flow in the tile at a first time and the updated estimation of the subsequent traffic flow for each tile of the plurality of tiles of the cellular network may be based on an actual measurement of the traffic flow in the tile at the first time. As mentioned earlier, the actual measurement of the traffic flow in the tile at the first can be a live (or real-time) measurement of the traffic flow in the tile at the.

As also mentioned earlier, managing resources related to the traffic flows in at least one tile of the cellular network can, for example, comprise allocating resources in the at least one tile to manage the traffic flows in the at least one tile, provisioning a quality of service (QoS) in the at least one tile to manage the traffic flows in the at least one tile, and/or any other management of resources related to the traffic flows in at least one tile of the cellular network.

At block 302, the managed resources are provided to one or more user equipments in the at least one tile of the plurality of tiles of the cellular network. More specifically, the processing circuitry 32 of the resource management node 30 provides the managed resources to one or more user equipments in the at least one tile of the plurality of tiles of the cellular network.

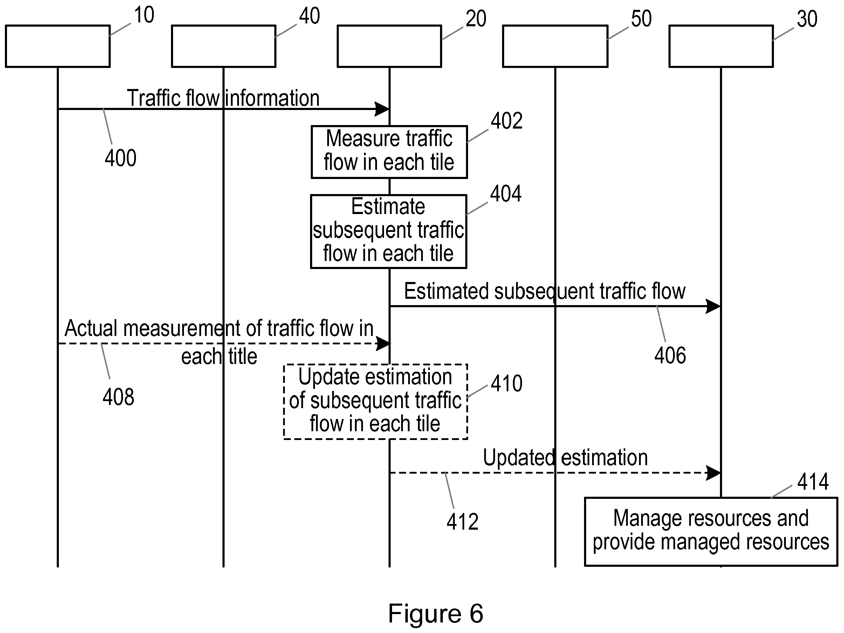

**Figure 6** is a signalling (or call flow) diagram illustrating an exchange of signals in an embodiment. The exchange of signals is in the system 100 described earlier. In the illustrated example embodiment, the system 100 comprises the at least one user equipment 10 mentioned earlier, the traffic flow management node 20 described earlier, the resource management node 30 described earlier, at least one base station 40, and at least one other node 50. The traffic flow management node 20 is as described earlier with reference to Figures 2 and 3 and the resource management node 30 is as described earlier with reference to Figures 4 and 5.

As illustrated by arrow 400 of Figure 6, information (or traffic flow information) is provided by at least one user equipment 10, e.g. via at least one base station 40. The information is indicative of a location and corresponding velocity of the at least one user equipment 10 in the cellular network. At block 402 of Figure 6, for each tile of a plurality of tiles of the cellular network, a traffic flow in the tile is measured based on the location and corresponding velocity of the at least one user equipment 10 in the cellular network from the information provided by the at least one user equipment 10. That is, the method described earlier with respect to block 200 of Figure 3 is performed.

At block 404 of Figure 6, for each tile of a plurality of tiles of the cellular network, subsequent traffic flow in the tile is estimated based on a comparison of the measured traffic flow in the tile to one or more previously measured traffic flows in the tile. That is, the method described earlier with respect to block 202 of Figure 3 is performed. As illustrated by arrow 406 of Figure 6, for each tile of the plurality of tiles of the cellular network, an indication of the estimated subsequent traffic flow in the tile is transmitted to a resource management node, e.g. via at least one other node 50, enabling management of resources related to the traffic flows in at least one tile of the cellular network by the resource management node. That is, the method described earlier with respect to block 204 of Figure 3 is performed.

As illustrated by arrow 408 of Figure 6 and as described earlier, in some embodiments, an actual measurement of the traffic flow in the tile may be provided by at least one user equipment 10. In these embodiments, at block 410 of Figure 6 and as described earlier, the estimation of the subsequent traffic flow in the tile is updated based on the actual measurement of the traffic flow in the tile. As illustrated by the arrow 412 of Figure 6 and as described earlier, an indication of the updated estimation of the subsequent traffic flow in the tile may be transmitted to the resource management node 30, e.g. via at least one other node 50, enabling management of resources related to the traffic flows in at least one tile of the cellular network by the resource management node 30.

At block 414 of Figure 6, resources related to the traffic flows in at least one tile of the plurality of tiles of the cellular network are managed based on the estimated subsequent traffic flow for each tile of the plurality of tiles of the cellular network and the managed resources are provided to one or more user equipments in the at least one tile of the plurality of tiles of the cellular network. That is, the method described earlier with respect to blocks 300 and 302 of Figure 5 is performed. In embodiments involving an updated estimation of the subsequent traffic flow, the resources related to the traffic flows in at least one tile of the plurality of tiles of the cellular network can be managed based on the updated estimation of the subsequent traffic flow for each tile of the plurality of tiles of the cellular network.

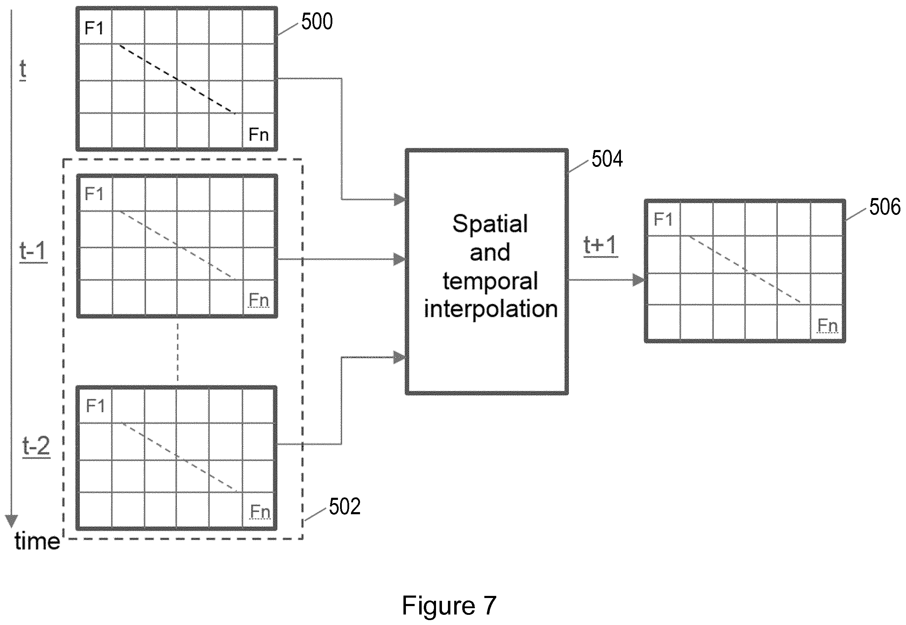

**Figure 7** illustrates a plurality of tiles 500, 502, 506 of a cellular network at different times t-2, t-1, t, t+1 according to an embodiment. As mentioned earlier, the plurality of tiles 500, 502, 506 make up a traffic flow measurement table.

In the illustrated example embodiment of Figure 7, the traffic flow is denoted by "F". Each traffic flow F1...Fn represents the traffic flow in a tile (or unit area) of a plurality of tiles 500, 502, 506. As illustrated in Figure 7, a traffic flow F1... Fn in each tile of a plurality of tiles 500 of the cellular network at a first time t is measured based on a location and corresponding velocity of at least one user equipment 10 in the cellular network from information provided by the at least one user equipment 10 (as described earlier with reference to block 200 of Figure 3). At block 504, a subsequent traffic flow F... Fn in each tile of the plurality of tiles 506 of the cellular network at a second time t+1 is estimated (as described earlier with reference to block 200 of Figure 3). The second time t+1 is later than the first time t. That is, a future traffic flow is predicted.

For each tile of the plurality of tiles of the cellular network, the subsequent traffic flow in the tile of the plurality of tiles 506 of the cellular network is estimated based on a comparison of the measured traffic flow in the tile of the plurality of tiles 500 of the cellular network to one or more previously measured traffic flows in the tile of the plurality of tiles 502 of the cellular network. That is, in the illustrated example embodiment, for each tile of the plurality of tiles of the cellular network, the measured traffic flow F... Fn at a first time t in the tile of the plurality of tiles 500 of the cellular network is compared to the measured traffic flow F... Fn at a third time t-1 and at a fourth time t-2 in the tile of a plurality of tiles 502 of the cellular network. Here, the third time t-1 and fourth time t-2 are earlier than the first time t. In some embodiments, the subsequent traffic flow in each tile of the plurality of tiles 506 of the cellular network can be estimated based on one or more spatial differences and/or one or more temporal differences identified by the comparison of the measured traffic flow in the tile of the plurality of tiles 500 of the cellular network to the one or more previously measured traffic flows in the tile of the plurality of tiles 502 of the cellular network. For example, a spatial and/or one or more temporal interpolation may be performed.

Thus, the subsequent traffic flow at a second time t+1 in each tile of the plurality of tiles 506 of the cellular network is estimated. Although the example embodiment illustrated in Figure 7 uses two previously measured traffic flows in the tile of the plurality of tiles 502 of the cellular network for the comparison, it will be understood that one or more than two previously measured traffic flows in the tile of the plurality of tiles 502 of the cellular network may be used for the comparison in other embodiments. As illustrated in Figure 7, current and previous traffic flow measurements can be used to predict future traffic flow. The future traffic flow at the second time t+1 can be predicted from current traffic flow measurements at the first time t and previous traffic flow measurements at the third and fourth times t-1, t-2, etc. The predicted traffic flow can be a macroscopic measurement, in some embodiments, which characterizes the average behaviour of the cellular network.

The method described with reference to Figure 7 may be repeated over time. For example, at the second time t+1, another subsequent traffic flow may be estimated for a traffic flow at a later fifth time t+2. That is, at the second time t+1, a prediction may be made for a future traffic flow at the fifth time t+2. The predicted traffic flow at the fifth time t+2 may be estimated in the same way as that described earlier and may be based on the traffic flows measured at one or more of the earlier times t+1, t, t-1, etc.

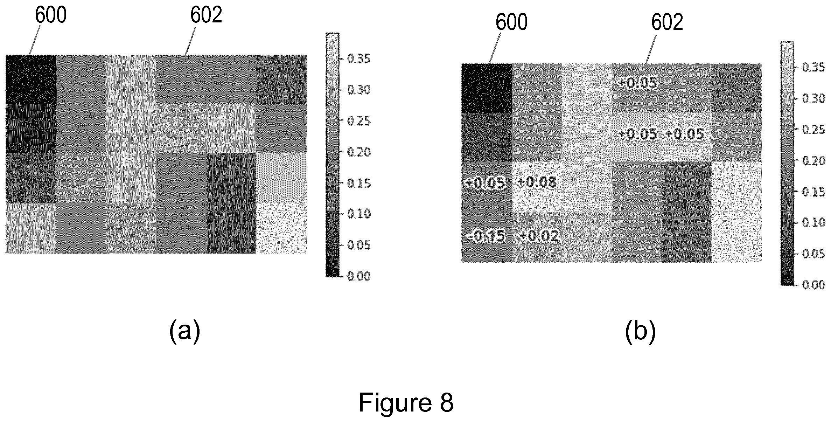

Figure 8 is a representation of traffic flow over time. In more detail, Figure 8(a) shows a flow table representation at the third time t-1 mentioned earlier with reference to Figure 7 and Figure 8(b) shows a flow table representation of the first time t mentioned earlier with reference to Figure 7. As described with reference to Figure 7, the third time t-1 is earlier than the first time t. The first time t is the current time, whereas the third time t-1 is an earlier time.

As illustrated in Figure 8, a traffic flow variation can be seen in the flow table representations. For example, there is no change in the measured traffic flow in a first tile 600 seen between the third time t-1 and the first time t, whereas there is a change (and, in particular, an increase of 0.05) in the measured traffic flow in a second tile 602 seen between the third time t-1 and the first time t. As mentioned earlier, in some embodiments, a machine learning (or AI) algorithm may use current and previous traffic flow measurements to learn spatial and temporal variations in the traffic flow measurements and predict a future traffic flow at t+dt. For example, the machine learning (or AI) algorithm may use the current and previous traffic flow tables shown in Figure 8 to learn the spatial and temporal variations of the traffic flow and predict the future traffic flow at t+dt.

The traffic flow measurement described herein can cover multiple base stations 40. In more detail, the at least one user equipment 10 described herein may be served by at least one of a plurality of base stations 40. Each of these base stations 40 has a coverage area. The plurality of base stations 40 may cover the (e.g. entire) coverage area of the cellular network. The plurality of tiles of the cellular network referred to herein can span the coverage areas of the plurality of base stations 40. The coverage areas of the plurality of base stations 40 may be overlapping.

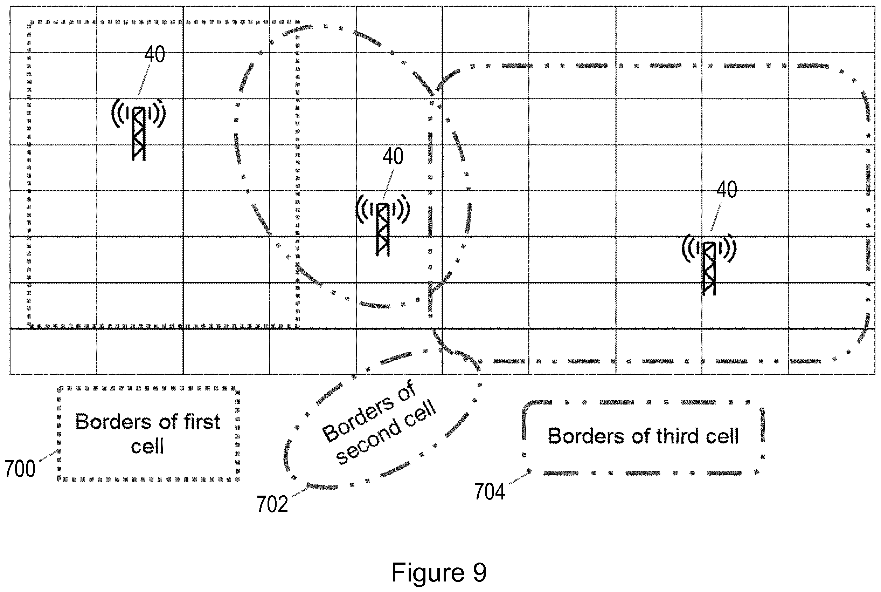

Figure 9 illustrates an example of a plurality of base stations 40 having overlapping coverage areas. As illustrated in Figure 9, the cellular network is distributed over a plurality of cells, each served by a base station 40. The borders of a first cell 700, the borders of a second cell 702 and the borders of a third cell 704 are illustrated in Figure 9. Each base station 40 provides its respective cell with coverage and thus defines a coverage area. In this example, the cellular network comprises three base stations 40 but it will be understood that the cellular network may comprise any other number of base stations 40. As illustrated in Figure 9, the borders of the cells of the plurality of base stations overlap. That is, the plurality of base stations 40 have overlapping coverage areas. The plurality of tiles span the different coverage areas of the plurality of base stations 40. The traffic flow measurement for each base station may have a different structure.

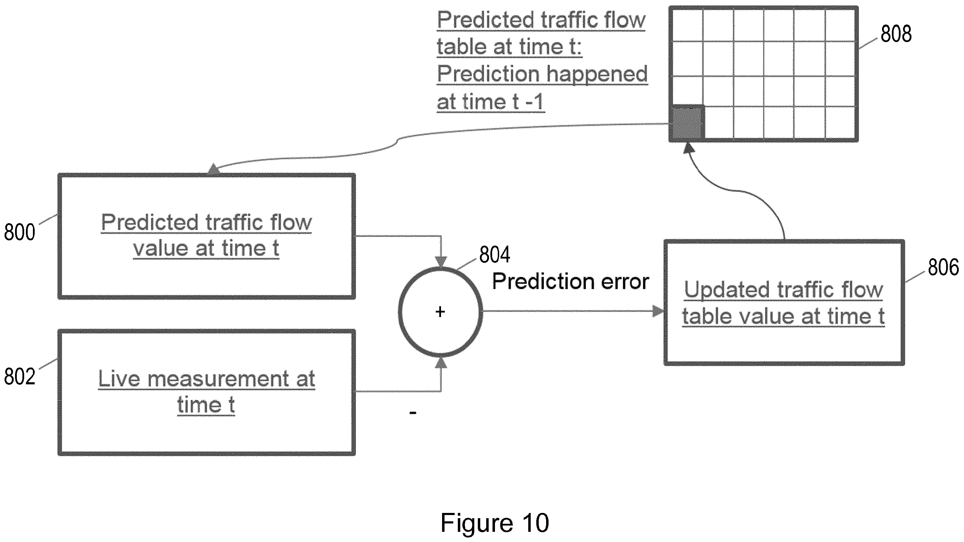

Figure 10 is a flowchart illustrating a method of managing traffic flows in a cellular network by a resource management node 30 in accordance with an embodiment. The resource management node 30 described earlier with reference to Figure 4 may be configured to operate in accordance with the method of Figure 10 according to some embodiments. The method can be performed by or under the control of the processing circuitry 32 of the resource management node 30.

The method illustrated in Figure 10 relates to the updating (e.g. correcting) of the estimation of the subsequent traffic flow in each tile of the plurality of tiles of the cellular network and is thus a method that may be performed subsequent to the method described earlier with reference to Figure 3 in which the subsequent traffic flow is estimated. The method illustrated in Figure 10 will be described in relation to a tile of the plurality of tiles of the cellular network but it will be understood that the method can be performed for each tile of the plurality of tiles of the cellular network.

With reference to Figure 10, at block 800, a subsequent traffic flow in the tile estimated for a first time t in the manner described earlier is provided. That is, a predicted traffic flow in the tile at the first time t is provided. The prediction of the traffic flow is performed at an earlier time t-1. At block 802, an actual measurement of the traffic flow in the tile at the first time t is provided. The actual measurement of the traffic flow in the tile in this example is a live (or real-time) measurement of the traffic flow in the tile.

At block 804, a prediction error is calculated. The prediction error is calculated as the difference between the predicted traffic flow in the tile at the first time t and the actual measurement of the traffic flow in the tile at the first time t. At block 806, the predicted traffic flow in the tile at the first time t is updated (e.g. corrected) by considering the prediction error. This update can be performed for each tile of the plurality of tiles. In this illustrated example, the traffic flow estimates are provided in a traffic flow measurement table. Thus, at block 806, the predicted traffic flow in the tile at the first time t is updated in the traffic flow table, as illustrated in the traffic flow measurement table 808. In some embodiments, the method described with reference to Figure 10 can be repeated as live (or real-time) measurements of the traffic flow arrive. It may be that multiple measurements of the traffic flow for a certain tile are available at the first time t, while no older measurements of the traffic flow for other tiles are available, e.g. t-2 for some tiles, t-6 for others tiles, and so on.

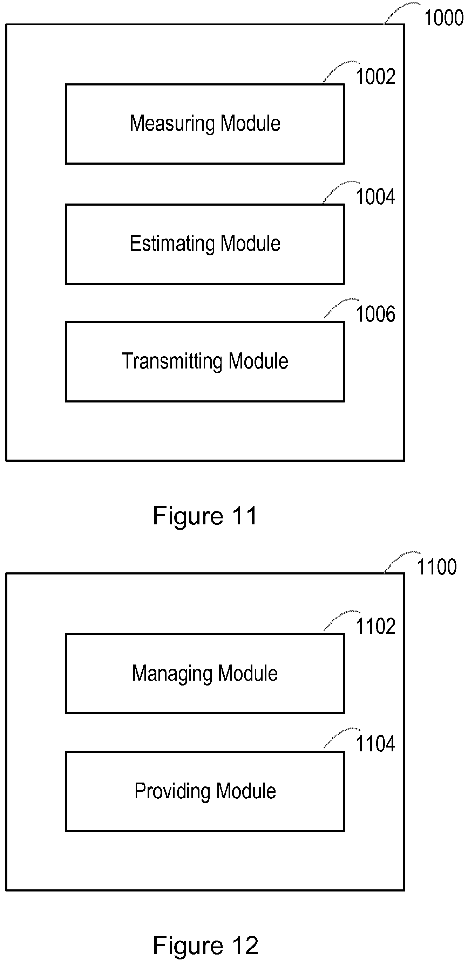

**Figure 11** is a block diagram illustrating a traffic flow management node 1000 in accordance with an embodiment. The traffic flow management node 1000 comprises a measuring module 1002 configured to, for each tile of a plurality of tiles of a cellular network, measure a traffic flow in the tile based on a location and corresponding velocity of at least one user equipment in the cellular network from information provided by the at least one user equipment. The traffic flow management node 1000 comprises an estimating module 1004 configured to, for each tile of a plurality of tiles of the cellular network, estimate subsequent traffic flow in the tile based on a comparison of the measured traffic flow in the tile to one or more previously measured traffic flows in the tile. The traffic flow management node 1000 comprises a transmitting module 1006 configured to, for each tile of a plurality of tiles of the cellular network, transmit an indication of the estimated subsequent traffic flow in the tile to a resource management node enabling management of resources related to the traffic flows in at least one tile of the cellular network by said resource management node. The traffic flow management node 1000 may operate in the manner described herein.

**Figure 12** is a block diagram illustrating a resource management node 1100 in accordance with an embodiment. The resource management node 1100 comprises a managing module 1102 configured to, manage resources related to the traffic flows in at least one tile of a plurality of tiles of the cellular network based on an estimated subsequent traffic flow for each tile of the plurality of tiles of the cellular network. The estimated subsequent traffic flow for each tile of the plurality of tiles of the cellular network is based on a comparison of a traffic flow in the tile measured based on a location and corresponding velocity of at least one user equipment in the cellular network to one or more previously measured traffic flows in the tile. The resource management node 1100 comprises a providing module 1104 configured to provide the managed resources to one or more user equipments in the at least one tile of the plurality of tiles of the cellular network. The resource management node 1100 may operate in the manner described herein.

There is also a computer program comprising instructions which, when executed by processing circuitry (such as the processing circuitry 22, 32 of any of the nodes 20, 30 described earlier), cause the processing circuitry to perform at least part of the method described herein. There is provided a computer program product, embodied on a non-transitory machine-readable medium, comprising instructions which are executable by processing circuitry (such as the processing circuitry 22, 32 of any of the nodes 20, 30 described earlier) to cause the processing circuitry to perform at least part of the method described herein. There is provided a computer program product comprising a carrier containing instructions for causing processing circuitry (such as the processing circuitry 22, 32 of any of the nodes 20, 30 described earlier) to perform at least part of the method described herein. In some embodiments, the carrier can be any one of an electronic signal, an optical signal, an electromagnetic signal, an electrical signal, a radio signal, a microwave signal, or a computer-readable storage medium.

The node functionality described herein can be performed by hardware. Thus, any one or more of the nodes described herein (e.g. any one or more of the traffic flow management node 20, 1000 and the resource management node 30, 1100) can be a hardware node. However, it will also be understood that at least part or all of the node functionality described herein can be virtualized. For example, the functions performed by any one or more of the nodes can be implemented in software running on generic hardware that is configured to orchestrate the node functionality. Thus, in some embodiments, any one or more of the nodes described herein (e.g. any one or more of the traffic flow management node 20, 1000 and the resource management node 30, 1100) can be a virtual node. In some embodiments, at least part or all of the node functionality described herein may be performed in a network enabled cloud. The node functionality described herein may all be at the same location or at least some of the node functionality may be distributed.

It will be understood that at least some or all of the method steps described herein can be automated in some embodiments. That is, in some embodiments, at least some or all of the method steps described herein can be performed automatically.

Thus, in the manner described herein, there is advantageously provided an improved technique for managing traffic flow in a cellular network. It is possible to measure traffic flow in a tile based on information from at least one user equipment 10, which is indicative of a location and corresponding velocity of the at least one user equipment 10, and then predict future traffic flow in the tile based on current and previous traffic flow measurements. There is also advantageously provided a method for updating (e.g. correcting) a subsequent traffic flow estimation based on an actual measurement of the traffic flow in the tile.

**Claims**

1. A method of managing traffic flows in a cellular network by a traffic flow management node, the method comprising, for each tile of a plurality of tiles of the cellular network:

   • measuring (200, 402) a traffic flow in the tile based on a location and corresponding velocity of at least one user equipment in the cellular network from information provided by the at least one user equipment, wherein the plurality of tiles of the cellular network are defined by a grid, and wherein the cellular network is segmented into the plurality of tiles such that tiles in the plurality of tiles do not correspond to cells of the cellular network;
• estimating (202, 404) subsequent traffic flow in the tile based on a comparison of the measured traffic flow in the tile to one or more previously measured traffic flows in the tile; and
• transmitting (204, 406) an indication of the estimated subsequent traffic flow in the tile to a resource management node enabling management (414) of resources related to the traffic flows in at least one tile of the cellular network by said resource management node.

2. A method as claimed in claim 1, the method comprising:

    • estimating the subsequent traffic flow in the tile based on one or more spatial differences, one or more temporal differences identified by the comparison of the measured traffic flow in the tile to the one or more previously measured traffic flows in the tile, and/or using a machine learning algorithm to estimate the subsequent traffic flow in the tile.

3. A method as claimed in any of the preceding claims, wherein:

    • the estimation of the subsequent traffic flow in the tile is an estimation of the subsequent traffic flow in the tile at a first time; and
    • the method comprises:

        ◦ updating (410) the estimation of the subsequent traffic flow in the tile based on an actual measurement of the traffic flow in the tile at the first time; and
        ◦ transmitting (412) an indication of the updated estimation of the subsequent traffic flow in the tile to the resource management node enabling management (414) of resources related to the traffic flows in at least one tile of the cellular network by said resource management node.

4. A method as claimed in any of the preceding claims, wherein the management of resources related to the traffic flows in at least one tile of the cellular network comprises:

    • allocating resources in the at least one tile to manage the traffic flows in the at least one tile; and/or
    • provisioning a quality of service in the at least one tile to manage the traffic flows in the at least one tile.

5. A method as claimed in any of the preceding claims, wherein said resources comprise resources for vehicle-to-everything, V2X, communication.

6. A method as claimed in any of the preceding claims, wherein the at least one user equipment is served by at least one of a plurality of base stations, each having a coverage area, and wherein the plurality of base stations cover the coverage area of the cellular network and the plurality of tiles of the cellular network span the coverage areas of the plurality of base stations.

7. A method as claimed in claim 6, wherein the coverage areas of the plurality of base stations are overlapping.

8. A method as claimed in any of the preceding claims, wherein the information provided by the at least one user equipment (10) is received from the at least one user equipment (10) and/or from at least one location service function node.

9. A method as claimed in any of the preceding claims, wherein the at least one user equipment comprise one or more vehicles and/or one or more mobile devices.

10. A traffic flow management node (20) configured to operate in accordance with any of claims 1 to 9.

11. A traffic flow management node (20) as claimed in claim 10, wherein the traffic flow management node is an application server, a node of a cellular network or a node outside the cellular network.

12. A method of managing traffic flows in a cellular network by a resource management node, the method comprising:

    • managing (300, 414) resources related to the traffic flows in at least one tile of a plurality of tiles of the cellular network based on an estimated subsequent traffic flow for each tile of the plurality of tiles of the cellular network, wherein the plurality of tiles of the cellular network are defined by a grid, and wherein the cellular network is segmented into the plurality of tiles such that tiles in the plurality of tiles do not correspond to cells of the cellular network,
    • wherein the estimated subsequent traffic flow for each tile of the plurality of tiles of the cellular network is based on a comparison of a traffic flow in the tile measured based on a location and corresponding velocity of at least one user equipment in the cellular network to one or more previously measured traffic flows in the tile; and
    • providing (302, 414) the managed resources to one or more user equipments in the at least one tile of the plurality of tiles of the cellular network.

13. A method as claimed in claim 12, wherein:

• the estimated subsequent traffic flow in the tile is an estimation of the subsequent traffic flow in the tile at a first time; and
• the method comprises:

◦ managing resources related to the traffic flows in at least one tile of the plurality of tiles of the cellular network based on an updated estimation of the subsequent traffic flow for each tile of the plurality of tiles of the cellular network, wherein the updated estimation of the subsequent traffic flow for each tile of the plurality of tiles of the cellular network is based on an actual measurement of the traffic flow in the tile at the first time.

14. A method as claimed in claim 12 or 13, wherein managing resources related to the traffic flows in at least one tile comprises:

• allocating resources in the at least one tile to manage the traffic flows in the at least one tile; and/or
• provisioning a quality of service in the at least one tile to manage the traffic flows in the at least one tile.

15. A resource management node (30) configured to operate in accordance with any of claims 12 to 14.

16. A system (100) comprising any one or more of:

- at least one traffic flow management node (20) as claimed in any of claims 10 or 11;
- at least one user equipment (10) configured to connect to the system and provide information indicative of a location and corresponding velocity of the at least one user equipment; and
- at least one resource management node (30) as claimed in claim 15.

17. A computer program product, embodied on a non-transitory machine-readable medium, comprising instructions which are executable by processing circuitry to cause the processing circuitry to perform the method according to any one or more of claims 1-9 and 12-14.

**Patentansprüche**

1. Verfahren zum Verwalten von Verkehrsflüssen in einem Zellularnetz durch einen Verkehrsflussverwaltungsknoten, das Verfahren umfassend für jede Kachel einer Vielzahl von Kacheln des Zellularnetzes:

• Messen (200, 402) eines Verkehrsflusses in der Kachel basierend auf einem Standort und einer entsprechenden Geschwindigkeit von mindestens einer Benutzereinrichtung in dem Zellularnetz, aus Informationen, die durch die mindestens eine Benutzereinrichtung bereitgestellt werden, wobei die Vielzahl von Kacheln des Zellularnetzes durch ein Raster definiert sind, und wobei das Zellularnetz in die Vielzahl von Kacheln segmentiert ist, derart, dass Kacheln in der Vielzahl von Kacheln Zellen des Zellularnetzes nicht entsprechen;
• Schätzen (202, 404) des nachfolgenden Verkehrsflusses in der Kachel basierend auf einem Vergleich des gemessenen Verkehrsflusses in der Kachel mit einem oder mehreren zuvor gemessenen Verkehrsflüssen in der Kachel; und
• Übertragen (204, 406) einer Angabe des geschätzten nachfolgenden Verkehrsflusses in der Kachel an einen Ressourcenverwaltungsknoten, wobei die Verwaltung (414) von Ressourcen, die sich auf die Verkehrsflüsse in mindestens einer Kachel des Zellularnetzes beziehen, durch den Ressourcenverwaltungsknoten ermöglicht wird.

2. Verfahren nach Anspruch 1, das Verfahren umfassend:

• Schätzen des nachfolgenden Verkehrsflusses in der Kachel basierend auf einem oder mehreren räumlichen Unterschieden, einem oder mehreren zeitlichen Unterschieden, die durch den Vergleich des gemessenen Verkehrsflusses in der Kachel mit dem einen oder den mehreren zuvor gemessenen Verkehrsflüssen in der Kachel identifiziert werden, und/oder Verwenden eines Maschinenlernalgorithmus, um den nachfolgenden Verkehrsfluss in der Kachel zu schätzen.

3. Verfahren nach einem der vorstehenden Ansprüche, wobei:

• die Schätzung des nachfolgenden Verkehrsflusses in der Kachel eine Schätzung des nachfolgenden Verkehrsflusses in der Kachel zu einem ersten Zeitpunkt ist; und
• das Verfahren umfasst:

◦ Aktualisieren (410) der Schätzung des nachfolgenden Verkehrsflusses in der Kachel basierend auf einer tatsächlichen Messung des Verkehrsflusses in der Kachel zu dem ersten Zeitpunkt; und

o Übertragen (412) einer Angabe der aktualisierten Schätzung des nachfolgenden Verkehrsflusses in der Kachel an den Ressourcenverwaltungsknoten, wobei die Verwaltung (414) von Ressourcen, die sich auf die Verkehrsflüsse in mindestens einer Kachel des Zellularnetzes beziehen, durch den Ressourcenverwaltungsknoten ermöglicht wird.

4. Verfahren nach einem der vorstehenden Ansprüche, wobei die Verwaltung von Ressourcen, die sich auf die Verkehrsflüsse in mindestens einer Kachel des Zellularnetzes beziehen, umfasst:

• Zuweisen von Ressourcen in der mindestens einen Kachel, um die Verkehrsflüsse in der mindestens einen Kachel zu verwalten; und/oder
• Bereitstellen einer Dienstqualität in der mindestens einen Kachel, um die Verkehrsflüsse in der mindestens einen Kachel zu verwalten.

5. Verfahren nach einem der vorstehenden Ansprüche, wobei die Ressourcen Ressourcen für die Fahrzeug-zu-Alles-Kommunikation, V2X-Kommunikation, umfassen.

6. Verfahren nach einem der vorstehenden Ansprüche, wobei die mindestens eine Benutzereinrichtung durch mindestens eine von einer Vielzahl von Basisstationen bedient wird, die jeweils einen Abdeckungsbereich aufweisen, und wobei die Vielzahl von Basisstationen den Abdeckungsbereich des Zellularnetzes abdecken und die Vielzahl von Kacheln des Zellularnetzes die Abdeckungsbereiche der Vielzahl von Basisstationen überspannen.

7. Verfahren nach Anspruch 6, wobei sich die Abdeckungsbereiche der Vielzahl von Basisstationen überlappen.

8. Verfahren nach einem der vorstehenden Ansprüche, wobei die Informationen, die durch die mindestens eine Benutzereinrichtung (10) bereitgestellt werden, von der mindestens einen Benutzereinrichtung (10) und/oder von mindestens einem Standortdienstfunktionsknoten empfangen werden.

9. Verfahren nach einem der vorstehenden Ansprüche, wobei die mindestens eine Benutzereinrichtung ein oder mehrere Fahrzeuge und/oder eine oder mehrere mobile Vorrichtungen umfasst.

10. Verkehrsflussverwaltungsknoten (20), der konfiguriert ist, um nach einem der Ansprüche 1 bis 9 betrieben zu werden.

11. Verkehrsflussverwaltungsknoten (20) nach Anspruch 10, wobei der Verkehrsflussverwaltungsknoten ein Anwendungsserver, ein Knoten eines Zellularnetzes oder ein Knoten außerhalb des Zellularnetzes ist.

12. Verfahren zum Verwalten von Verkehrsflüssen in einem Zellularnetz durch einen Ressourcenverwaltungsknoten, das Verfahren umfassend:

• Verwalten (300, 414) von Ressourcen, die sich auf die Verkehrsflüsse in mindestens einer Kachel einer Vielzahl von Kacheln des Zellularnetzes in beziehen, basierend auf einem geschätzten nachfolgenden Verkehrsfluss für jede Kachel der Vielzahl von Kacheln des Zellularnetzes, wobei die Vielzahl von Kacheln des Zellularnetzes durch ein Raster definiert sind, und wobei das Zellularnetz in die Vielzahl von Kacheln segmentiert ist, derart, dass Kacheln in der Vielzahl von Kacheln Zellen des Zellularnetzes nicht entsprechen,
• wobei der geschätzte nachfolgende Verkehrsfluss für jede Kachel der Vielzahl von Kacheln des Zellularnetzes auf einem Vergleich eines Verkehrsflusses in der Kachel, der basierend auf einem Standort und einer entsprechenden Geschwindigkeit von mindestens einer Benutzereinrichtung in dem Zellularnetz gemessen wird, mit einem oder mehreren zuvor gemessenen Verkehrsflüssen in der Kachel basiert; und
• Bereitstellen (302, 414) der verwalteten Ressourcen an eine oder mehrere Benutzereinrichtungen in der mindestens einen Kachel der Vielzahl von Kacheln des Zellularnetzes.

13. Verfahren nach Anspruch 12, wobei:

• der geschätzte nachfolgende Verkehrsfluss in der Kachel eine Schätzung des nachfolgenden Verkehrsflusses in der Kachel zu einem ersten Zeitpunkt ist; und
• das Verfahren umfasst:

◦ Verwalten von Ressourcen, die sich auf die Verkehrsflüsse in mindestens einer Kachel der Vielzahl von Kacheln des Zellularnetzes beziehen, basierend auf einer aktualisierten Schätzung des nachfolgenden Verkehrsflusses für jede Kachel der Vielzahl von Kacheln des Zellularnetzes, wobei die aktualisierte Schätzung des nachfolgenden Verkehrsflusses für jede Kachel der Vielzahl von Kacheln des Zellularnetzes auf einer tatsächlichen Messung des Verkehrsflusses in der Kachel zu dem ersten Zeitpunkt basiert.

14. Verfahren nach Anspruch 12 oder 13, wobei das Verwalten von Ressourcen, die sich auf die Verkehrsflüsse in mindestens einer Kachel beziehen, umfasst:

• Zuweisen von Ressourcen in der mindestens einen Kachel, um die Verkehrsflüsse in der mindestens einen Kachel zu verwalten; und/oder
• Bereitstellen einer Dienstqualität in der mindestens einen Kachel, um die Verkehrsflüsse in der mindestens einen Kachel zu verwalten.

15. Ressourcenverwaltungsknoten (30), der konfiguriert ist, um nach einem der Ansprüche 12 bis 14 betrieben zu werden.

16. System (100), umfassend eines oder mehrere von Folgendem:

- mindestens einen Verkehrsflussverwaltungsknoten (20) nach einem der Ansprüche 10 oder 11;
- mindestens eine Benutzereinrichtung (10), die konfiguriert ist, um eine Verbindung mit dem System herzustellen und Informationen bereitzustellen, die einen Standort und die entsprechende Geschwindigkeit der mindestens einen Benutzereinrichtung angeben; und
- mindestens einen Ressourcenverwaltungsknoten (30) nach Anspruch 15.

17. Computerprogrammprodukt, das auf einem nicht flüchtigen maschinenlesbaren Medium verkörpert ist, umfassend Anweisungen, die durch die Verarbeitungsschaltlogik ausführbar sind, um die Verarbeitungsschaltlogik zu veranlassen, das Verfahren nach einem oder mehreren der Ansprüche 1 bis 9 und 12 bis 14 durchzuführen.

**Revendications**

1. Procédé de gestion des flux de trafic dans un réseau cellulaire par un noeud de gestion des flux de trafic, le procédé comprenant, pour chaque tuile d'une pluralité de tuiles du réseau cellulaire :

• la mesure (200, 402) d'un flux de trafic dans la tuile sur la base d'un emplacement et d'une vitesse correspondante d'au moins un équipement utilisateur dans le réseau cellulaire à partir d'informations fournies par l'au moins un équipement utilisateur, dans lequel la pluralité de tuiles du réseau cellulaire est définie par une grille, et dans lequel le réseau cellulaire est segmenté en la pluralité de tuiles de sorte que les tuiles de la pluralité de tuiles ne correspondent pas à des cellules du réseau cellulaire ;
• l'estimation (202, 404) du flux de trafic ultérieur dans la tuile sur la base d'une comparaison du flux de trafic mesuré dans la tuile avec un ou plusieurs flux de trafic précédemment mesurés dans la tuile ; et
• la transmission (204, 406) d'une indication du flux de trafic ultérieur estimé dans la tuile à un noeud de gestion des ressources permettant la gestion (414) des ressources liées aux flux de trafic dans au moins une tuile du réseau cellulaire par ledit noeud de gestion des ressources.

2. Procédé selon la revendication 1, le procédé comprenant :

• l'estimation du flux de trafic ultérieur dans la tuile sur la base d'une ou plusieurs différences spatiales, d'un ou plusieurs écarts temporels identifiés par la comparaison du flux de trafic mesuré dans la tuile avec un ou plusieurs flux de trafic précédemment mesurés dans la tuile, et/ou l'utilisation d'un algorithme d'apprentissage automatique pour estimer le flux de trafic ultérieur dans la tuile.

3. Procédé selon l'une quelconque des revendications précédentes, dans lequel :

• l'estimation du flux de trafic ultérieur dans la tuile est une estimation du flux de trafic ultérieur dans la tuile à un premier moment ; et
• le procédé comprend :

o la mise à jour (410) de l'estimation du flux de trafic ultérieur dans la tuile sur la base d'une mesure réelle du flux de trafic dans la tuile au premier moment ; et
o la transmission (412) d'une indication de l'estimation mise à jour du flux de trafic ultérieur dans la tuile au noeud de gestion des ressources permettant la gestion (414) des ressources liées aux flux de trafic dans au moins une tuile du réseau cellulaire par ledit noeud de gestion des ressources.

4. Procédé selon l'une quelconque des revendications précédentes, dans lequel la gestion des ressources liées aux flux de trafic dans au moins une tuile du réseau cellulaire comprend :

• l'allocation de ressources dans l'au moins une tuile pour gérer les flux de trafic dans l'au moins une tuile ; et/ou
• la fourniture d'une qualité de service dans l'au moins une tuile pour gérer les flux de trafic dans l'au moins une tuile.

5. Procédé selon l'une quelconque des revendications précédentes, dans lequel lesdites ressources comprennent des ressources pour la communication de véhicule à tout, V2X.

6. Procédé selon l'une quelconque des revendications précédentes, dans lequel l'au moins un équipement utilisateur est desservi par au moins l'une parmi une pluralité de stations de base, chacune ayant une zone de couverture, et dans lequel la pluralité de stations de base couvre la zone de couverture du réseau cellulaire et la pluralité de tuiles du réseau cellulaire couvre les zones de couverture de la pluralité de stations de base.

7. Procédé selon la revendication 6, dans lequel les zones de couverture de la pluralité de stations de base se chevauchent.

8. Procédé selon l'une quelconque des revendications précédentes, dans lequel les informations fournies par l'au moins un équipement utilisateur (10) sont reçues de l'au moins un équipement utilisateur (10) et/ou d'au moins un noeud de fonction de service d'emplacement.

9. Procédé selon l'une quelconque des revendications précédentes, dans lequel l'au moins un équipement utilisateur comprend un ou plusieurs véhicules et/ou un ou plusieurs appareils mobiles.

10. Noeud de gestion des flux de trafic (20) configuré pour fonctionner conformément à l'une quelconque des revendications 1 à 9.

11. Noeud de gestion des flux de trafic (20) selon la revendication 10, dans lequel le noeud de gestion des flux de trafic est un serveur d'application, un noeud d'un réseau cellulaire ou un noeud extérieur au réseau cellulaire.

12. Procédé de gestion des flux de trafic dans un réseau cellulaire par un noeud de gestion des ressources, le procédé comprenant :

   • la gestion (300, 414) des ressources liées aux flux de trafic dans au moins une tuile d'une pluralité de tuiles du réseau cellulaire sur la base d'un flux de trafic ultérieur estimé pour chaque tuile de la pluralité de tuiles du réseau cellulaire, dans lequel la pluralité de tuiles du réseau cellulaire est définie par une grille, et dans lequel le réseau cellulaire est segmenté en la pluralité de tuiles de sorte que les tuiles de la pluralité de tuiles ne correspondent pas à des cellules du réseau cellulaire,

   • dans lequel le flux de trafic ultérieur estimé pour chaque tuile de la pluralité de tuiles du réseau cellulaire est basé sur une comparaison d'un flux de trafic dans la tuile, mesuré sur la base d'un emplacement et de la vitesse correspondante d'au moins un équipement utilisateur dans le réseau cellulaire, avec un ou plusieurs flux de trafic précédemment mesurés dans la tuile ; et
   • la fourniture (302, 414) des ressources gérées à un ou plusieurs équipements utilisateur dans l'au moins une tuile de la pluralité de tuiles du réseau cellulaire.

13. Procédé selon la revendication 12, dans lequel :

   • le flux de trafic ultérieur estimé dans la tuile est une estimation du flux de trafic ultérieur dans la tuile à un premier moment ; et
   • le procédé comprend :

      o la gestion des ressources liées aux flux de trafic dans au moins une tuile de la pluralité de tuiles du réseau cellulaire sur la base d'une estimation mise à jour du flux de trafic ultérieur pour chaque tuile de la pluralité de tuiles du réseau cellulaire, dans lequel l'estimation mise à jour du flux de trafic ultérieur pour chaque tuile de la pluralité de tuiles du réseau cellulaire est basée sur une mesure réelle du flux de trafic dans la tuile au premier moment.

14. Procédé selon la revendication 12 ou 13, dans lequel la gestion des ressources liées aux flux de trafic dans au moins une tuile comprend :

   • l'allocation de ressources dans l'au moins une tuile pour gérer les flux de trafic dans l'au moins une tuile ; et/ou
   • la fourniture d'une qualité de service dans l'au moins une tuile pour gérer les flux de trafic dans l'au moins une tuile.

15. Noeud de gestion des ressources (30) configuré pour fonctionner conformément à l'une quelconque des revendications 12 à 14.

16. Système (100) comprenant l'un ou les quelconques parmi :

   - au moins un noeud de gestion des flux de trafic (20) selon l'une quelconque des revendications 10 ou 11 ;
   - au moins un équipement utilisateur (10) configuré pour se connecter au système et fournir des informations indiquant un emplacement et une vitesse correspondante de l'au moins un équipement utilisateur ; et
- au moins un noeud de gestion des ressources (30) selon la revendication 15.

17. Produit-programme informatique, incorporé dans un support non transitoire lisible par machine, comprenant des instructions qui sont exécutables par la circuiterie de traitement pour amener la circuiterie de traitement à mettre en oeuvre le procédé selon l'une ou les quelconques des revendications 1 à 9 et 12 à 14.

Figure 1

20

Figure 2

Measure traffic flow in each tile — 200

Estimate subsequent traffic flow in each tile — 202

Transmit an indication of the estimated subsequent traffic flow in each tile — 204

Figure 3

Figure 4

Figure 5

Figure 6

EP 3 957 098 B1

Figure 7

(a)                                                                  (b)

Figure 8

Figure 9

EP 3 957 098 B1

Predicted traffic flow
table at time t:
Prediction happened
at time t -1

808

800 — Predicted traffic flow
value at time t

804
Prediction error

806

Updated traffic flow
table value at time t

802 — Live measurement at
time t

+

-

Figure 10

1000

1002

Measuring Module

1004

Estimating Module

1006

Transmitting Module

Figure 11

1100

1102

Managing Module

1104

Providing Module

Figure 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017007474 A
- WO 2017191615 A
- US 20180204453